# EUROPEAN PATENT APPLICATION

(11) **EP 2 674 903 A1**
(43) Date of publication of application: **18.12.2013**
(21) Application number: 13180484.1
(22) Date of filing: 30.12.2009
(51) Int. Cl.: G06Q 30/02, G06Q 30/00, G01C 21/00, G06F 17/30

(54) **Arrangement for managing mobile device access to precinct regions containing services and products and information**

(30) Priority: 06.01.2009 AU 2009900026
(62) Divisional of application: 09837236.0
(71) Applicant: XPED Holdings Pty Ltd, Technology Park, South Australia 5095 (AU)
(72) Inventor: The designation of the inventor has not yet been filed
(74) Representative: Walker, Ross Thomson

(57) **Abstract**

An arrangement for managing mobile device access to precinct regions so that a user can access usable information about certain products, services or other things from said precinct for real time consideration and decision making, said arrangement including: a server with a database of vendors, products, services, promotional materials, information, applications and other resources for each precinct; a hand-held device having means to allow a user to operate software applications including a web browser; said hand-held device having means to support short range wireless communication protocols; said hand-held device having navigation means displayable upon said screen to locate, promote and/or direct a customer to a certain location and/or vendor within precinct; communication means for said hand-held device to wirelessly access information from and transfer information to said database; wherein provision for the hand-held device to associate with a precinct is realised by the inherent short range wireless communication protocol of the hand-held device to be activated by proximity with a kiosk, port, pad, gate or zone (proximity station) within or near to the precinct region such that once access to the wireless network has been established as permitted through the proximity gesture of the hand-held device coming in range with said proximity station, the user of the hand-held device may then interact with the precinct and those associated vendors, products, services, information, applications and other resources from the database and to be then under the guidance of the navigational display appearing on the hand-held device to be then guided to the point of sale of such a vendor, product and/or service.

## Description

### FIELD OF THE INVENTION

This invention relates to a unique arrangement for managing mobile device access from a customer to information about services and products via wireless networks in localised or sub localised locations utilising an electronic device and various electronic communication protocols to conveniently bring together a customer and a vendor's information about relevant products and services more efficiently, effectively, securely and conveniently before a purchase decision is made by the customer.

### BACKGROUND

At present there is a real push in the market place for greater wireless connectivity between electronic hand-held devices such as Smartphones, Pocket PC's, PDA's and so forth so that members of the purchasing public are able to stay organised and fully informed with information while carrying out their daily tasks including making purchasing decisions on a particular product or service.

Being a hand-held device, the size, weight, ergonomics, usability and battery life are all of utmost importance and therefore for the most part these devices themselves need to be modest in their hardware and come with a basic set of software applications for the device to operate correctly, otherwise they become too cumbersome to carry, difficult to operate or are simply too expensive for the average consumer.

Given that these electronic hand-held devices are assisting us all so dramatically in the organisation and decision making of our daily tasks those offering their various wares and services to the consumer want to be part of these decision-making considerations by the user.

Hence there is a real competing demand between the user of the electronic device who wants to synchronise themselves with various wireless networks including the world-wide web, hot spots and so forth, so as to be as informed as possible when decision making is required, but at the same time all the vendors and suppliers also want to be synchronised with this particular hand-held electronic device in order to have particular options or details of their products and/or services considered before a purchasing decision is made by the consumer.

While not exclusively so, conventionally the primary connection for Smartphone devices is prominently through a cellular link wherein the primary connection for electronic devices such as Pocket PC's, PDA's and so forth is generally through Wi-Fi.

When it comes to connecting to the internet or other wireless networks, cellular connections are generally available anywhere you can pick up a cell or mobile phone signal wherein Wi-Fi connectivity offers the required connectivity to the Internet or wireless network from specialised locations such as a public Wi-Fi hotspot and so forth, where rarely any kind of authorization or security check is required, depending on the circumstances, before access is allowed.

There are two main problems with using cellular type connections for this application. Firstly the cellular communications service must be paid for and secondly in busy cells access to data channels can become congested leading to low quality of service. Both these factors adversely impact the customer experience.

Wi-Fi connections are better suited to this application because they can be installed as infrastructure and thereby dimensioned correctly for each individual location and offer a significantly higher communications bandwidth. However offering many local networks causes problems for the user because they must first select the network they want to connect to from the,many available and then start some kind of application such as a web browser to access the services there.

While the user connects within a particular location or cell, once connected to that wireless network, the web browser that is included as part of the software application on the device or another application downloaded on connection to the network then takes over guiding the user to a pre-set website and so forth, with listing of products, services, information, options and so forth.

While in practice this seems useful to that person operating the hand-held device in that connectivity has given them access to the wireless network and the available data, so far as their immediate task of making a decision such as the purchasing of a product in a particular localised location there are still difficulties that arise.

First and foremost the user may be overwhelmed with relevant information of products services, information, options and so forth.

For example the user of the electronic hand-held device may enter a large shopping mall wherein the Wi-Fi connectivity has made a connection to a website of the shopping mail wireless network which then commences downloading to the user's hand-held electronic device lots of information about the shopping mall, the stores included therein and various product sales and so forth.

Nonetheless while this exchange of information may seem localised it still is at best distant interaction between the shopping complex per se and the user who has just entered the general area of the shopping mall. While GPS functionalities will be commonplace in modern day Smartphones and Pocket PC's, and can be utilised as part of the supply of information to the user of the hand-held device, the fact remains that limitations will exist when all that is available is conventional connectivity between a hand-held device and the wireless network will be general location information, rather than tangible real life data that is relevant to a precise store, location and/or product the customer is considering.

Therefore while all the shop holders throughout the shopping mall may have placed all the information upon the shopping mall's server for wireless network access, so that as soon as the user enters the shopping mall that information can be downloaded to the relevant electronic device of the user, this volume of information makes much of the material's usefulness, convenience and effectiveness for quick decision making required by the user before a purchase particularly limiting.

Therefore there still remains a need in the relevant area for managing mobile device access to services and products via wireless network that can do so far more efficiently, effectively, securely and conveniently so that the information being downloaded to the hand-held device will be of relevance in real time as the user makes their way through a particular location or even store within the shopping mall and so forth

The conventional connectivity means to the wireless networks in such shopping areas and so forth as introduced above are not adaptable enough to provide a limited type connectivity that can bring about this required revolution in supplying relevant information at a point of time to a consumer at a particular location, or a location to be guided to, which they can then realistically use m order to influence or at least make a conslderation before deciding upon a purchase.

Accordingly it is an object of this invention to provide an arrangement for managing mobile device access to services and products via a wireless network over and above just the simple use of cellular connections and Wi-Fi.

### SUMMARY OF THE INVENTION

Accordingly, in one form of the invention there is provided an arrangement for managing mobile device access to a wireless network in a localised precinct location so that a user can download usable information about certain products and services from said precinct for real time consideration and decision making, said arrangement including:
a hand-held device with user functionality to operate software application including a web browser;
said hand-held device having means to support short range wireless communication protocols;
said hand-held device further including navigation means displayable upon said screen to locate, promote and/or direct a customer to a certain location and/or vendor within a precinct;
a server with a database of vendors, products, applications and other resources, promotional materials and information for each precinct;
communication means for said hand-held device to wirelessly access, read and/or retrieve information from said database;
wherein provision for the hand-held device to associate with a precinct is realised by the inherent short range wireless communication protocol of the hand-held device to be activated by proximity with a kiosk, port, pad, gate or zone device hereafter referred to as a proximity station, within the precinct location such that once access to the wireless network has been established as permitted through the proximity gesture of the hand-held device coming in contact with said proximity station, the user of the hand-held device may then seek information about a particular precinct and those associated vendors, products, services, applications and/or other resources from the database and to be then under the guidance of the navigational display appearing on the hand-held device to be then guided to the point of sale of such a vendor, service and/or product.

In preference the short range wireless communication protocols include near field communications, inductive coupling or other short-range communications technology that acts over the distance of several centimetres hereafter referred to as Proximity-RF;

In preference communication means for said hand-held device to wirelessly access, read and/or retrieve information from said database includes a local area network (LAN) based on Wi-Fi or a personal area network (PAN) based on ZigBee or Bluetooth or UWB;

In preference a vendor may associate themselves with their own precinct or alternatively several vendors may be grouped by a common precinct. Alternatively a precinct may be standalone or may be encompassed by another larger precinct or alternatively encompass other smaller precincts.

Advantageously under such an arrangement now each vendor can upload the information about their location, products, services, applications and/or other resources, promotional materials as well as any specials and the like that currently exist into an area of the database provided for that precinct which once a customer comes in range, for example sets foot upon the main shopping street in a city or enters a shopping centre or enters an individual store or enters the grounds of a festival, sporting event or other attraction, can conveniently use the hand-held device and through interaction with a proximity station after which access is then provided to the correct wireless network for communication with the area of the database that holds information on that particular precinct

Importantly the precinct concept and the principle of grouping and containment provides very powerful scope reduction capabilities for searching the database of vendors. For example if a customer made an association with precinct D and instigated a search for a common item, the item may be found in precincts A, B and E. However if the customer made an association with precinct C then the search results would be limited to precincts A and B and similarly if the customer made an association with precinct A the search results would be limited to only that precinct.

Advantageously the precinct concept allows location based services to be implemented without the need for the hand-held device to have a GPS or other positioning system. This is possible because localization can now be associated solely with the precinct and not with the hand-held device. This important concept will enable lower cost hand-held devices to be made because the cost of the GPS receiver, antenna and other navigation sensors can be eliminated.

As the person skilled in the art will appreciate, the electronic hand-held devices will include a variety of proprietary software and hardware means to allow the exchange between the customer and vendor to take place in the safe and secure electronic media.

In the preferred embodiment where a customer would own their own hand-held device, such devices would be personalized with the information of the customer and their preferences and other settings where such details are held securely in the hand-held device and will only be provided to other entities once trust has been established and the customer has authorized such exchanges.

Alternatively in some embodiments, there will be situations where the customer will not be in possession of his or her own hand-held device, but preferably such devices are purchasable or available for hire or loan from a location convenient to the vendor's precinct.

For example, a customer could enter the shopping plaza or the main shopping street or a venue or attraction and be introduced to this unique arrangement adapted to facilitate commercial exchange by inserting their credit card or loyalty card into an automated dispenser and the device could then be made available.

As the person skilled in the art will appreciate, while the device has been described here with functionality to allow the facilitation to bnng together customer and vendor for an exchange to take place more efficiently, it is to be expected in many embodiments the device will include a vanety of other functional characteristics including telecommunication features to act as a mobile phone, PDA's, media players and the like.

As authority to access the wireless network and subsequently the database, applications and/or other resources for the precinct is required first by the Proximity-RF touch capabilities of a hand-held device, there is a physical requirement for the customer to get themselves in close proximity, literally within several centimetres of the proximity station which will allow the hand-held device to associate with the vendor's precinct and thereby have access to their information and services

These proximity stations which hand-held devices are activated by can be kept under close surveillance and hence if for some inadvertent reason the device was stolen, the apprehension of the thief can be detected as the device would only become accessible once it is placed in close physical contact with the proximity station to which surveillance of such station is continuously under.

In preference the hand-held device navigation means includes a wireless positioning system derived from the positioning capability of the communications means (for example Wi-Fi or ZigBee mesh), two or more accelerometers, a compass, floor plan or map data relating to the precinct and software algorithms to analyse and fuse together the network derived position, sensor denved displacements and data to yield an optimum position solution.

Advantageously, as the navigation means preferably uses the sensors that include the wireless positioning system and accelerometers and a compass and map data from the precinct, the wireless positioning system co-ordinates are then able to provide a location and if the coverage is not available or the data from the wireless positioning system is not sufficiently accurate, data from the accelerometers and compass may be used to provide an estimate of the current location based on a dead reckoned solution derived from the movement sensed by these sensors in relation to the last known wireless positioning system coordinates and map or floor plan data of the precinct that may be retrieved from the database.

Advantageously as the customer interacts with proximity stations where the precise location of the station can be determined, the hand-held device may reset the current position solution to that of the station and thereby ameliorate any errors in position that may be accumulating.

Advantageously as the navigation means also includes a compass which is displayable upon the screen of the hand-held device and is able to direct the customer when no heading data is available from the wireless positioning system the customer is never left directionless.

Advantageously, if the customer is stationary, the device through the use of the compass displayed on the screen, is able to visually point out to the customer which direction to face and travel to get to the required destination.

Hence, while in the past there have been a variety of navigational devices which include a small monitor to help assist in guiding a person from location A to location B, such devices even those now incorporated in mobile phones, function for the most part utilising only GPS capabilities or similar protocols thereto

Such navigational systems are looking at things more at the macro level, where in fact in this unique arrangement, to facilitate in guiding the customer directly to the point of sale of the vendor, more than just GPS capabilities have been included within the hand-held device. Hence advantageously, the introduction of the use of wireless positioning system and accelerometers and compass and map or floor plan data provides continuous navigation to the customer at times and locations when GPS is not accessible.

At the same time with the use of the compass, the information provided on screen on the hand-held device is easy to interpret and in cases where the customer needs to turn, for example 180° around, such instruction is easily displayable upon the screen through the use of the compass configuration.

As introduced above, the device will include both LAN and PAN and Proximity-RF communication means.

Advantageously through the use of both near and local area wireless communication, the customer will be freely able to walk around, for example a shopping plaza and the like, continually receiving and in communication with the database that contains all the relevant information about those stores and products presentable to the customer in that particular precinct.

Advantageously and also most importanty, not only is this hand-held device inherently equipped with a several wireless networking means, but also the important Proximity-RF communication means, which as introduced above provides an important characteristic and important point of differentiation of this particular device from a conventional mobile phone because by the interaction with a proximity station this hand-held device may be securely introduced to one or more networks simultaneously. For example a retail precinct for a supermarket may be equipped with two wireless networks used for different purposes. Network A may be a ZigBee star configured network for carrying high speed data communication to the database however network B may be a ZigBee mesh configured network from which the position of the hand-held device can be obtained.

The situation in this arrangement is certainly over and above that of a wireless mobile phone communicating with a database within a hot spot location.

Due to the introduction of the proximity station mechanism, there is the requirement now for a physical type interaction between the customer and those vendors who are presenting their products within the shopping plaza or the like. The customer is not freely allowed to simply access the collated information present within the database. The customer must physically acknowledge and make the proximity gesture at the defined proximity station by placing the hand-held device up close to the station or by passing between gates or other similar arrangement so that acknowledgement between the station and the hand-held device is made through the use of the Proximity-RF communication protocol.

Once this authorisation has been achieved between the hand-held device and the station which has been provided by the vendor such as a shopping plaza or a specific store or a venue, the customer is then free to utilise the resources and other services provided by the precinct with the intent of engaging in a commercial exchange,

Advantageously, by having this Proximity-RF communication feature as part of the arrangement means that access to the wireless network and database can be made privileged and secure and can be monitored for appropriate usage, network capacity, quotas, security and collection of information reason.

In preference the hand-held device includes further features such as a barcode reader, preferably in the form of a camera with appropriate barcode reading software or a dedicated barcode reader which is used to scan products as they are accumulated.

An advantage of such an arrangement is that the customer can utilise their hand-held device, be guided to a particular product, select that product and then through the use of the barcode, acknowledge that the product has been selected for purchase.

Preferably also as well as barcode scanning the product items one could also use contactless smartcard chips on the shelves. Although these may cost more than a barcode they would allow the system to continue to provide product information to the customer in the event the in-store network failure, because the product information could be stored in the chip. Advantageously this feature offers a good backup/failsafe measure.

As the person skilled in the art will appreciate, the device maybe inherently endowed with various payments means in which a purchase can then be credited or debited from various financial accounts so that both customer and vendor have met their obligations and expectations for the exchange.

In preference, the hand-held device also includes a multiprotocol wireless smartcard reader/writer that may support the MiFare and Felica types which is adapted to communicate with loyalty cards and with the NFC type to access point of sales systems that have attached suitable communications means to enable the hand-held device to emulate credit/debit cards. In an alternate arrangement the hand-held device may itself act as a secure payment terminal and perform electronic funds transfer transactions directly without the need for a separate card but may require the customer to input a second factor for authentication such as a PIN code or some biometric identification.

An advantage of such an arrangement is that when the customer decides to use this device, they are not penalised nor would they lose out on any loyalty arrangement they have as part of any other buying arrangement that they are members of.

The device will support and recognise these kinds of arrangements so that the customer is able to maintain and accrue the required bonuses or discounts that one would expect from such loyalty programs.

In preference, the hand-held device will interact with the precinct in a manner so as to record details to the database and/or hand-held device regarding the customer's demographic information, purchases, dates, times, positions, speeds orientations and so forth.

Advantageously this information can then be used for marketing activities, shop planning such as product placement and layout, aisle widths to control or expect high traffic areas and the like and for the production of density maps and dwell times for the associated precinct

Advantageously this information can then be used for event and venue planning such as attraction or exhibit placement and layout, facilities usage and to plan for and control or expect high traffic areas and the like.

This arrangement will also allow the transfer of shopping lists, program selections and itineraries and the like wherein a customer will be able to purchase an inexpensive terminal that connects, for example, to a computer or the like through a cable or wireless connection. The customer would then be able to download a planning software program from a vendor's website from which the information will be derived. This will allow the customer to record or transfer across their personal preference details, shopping list and program selections and itineraries through the hand-held device or to a loyalty card for those customers that do not own a hand-held device.

As the hand-held device has access to the database, it can then interpret the personal preference details and shopping list or program selection or itinerary and commence the facilitation process of bringing the customer into contact with each individual item on the shopping list or program selection or itinerary.

Advantageously in this system, not only is the hand-held device acting as an electronic shopping list or program guide or itinerary planner, it is also acting as a means in which to almost physically guide or take the customer to the point of sale location for that particular product or program or service.

As introduced above, at the same time the hand-held device can include various secured payment means and in combination with the barcode reading means or on-screen selection means (e.g. from a list or other display on the device), monitor the products that are selected by the customer from the shopping list, program guide or itinerary, which would literally allow the customer to be guided through the precinct, for example a shopping mall and even throughout the aisles of a supermarket and the like, wherein as being guided, the customer is then interacting further with the hand-held device by identifying through the barcode or on-screen selection mechanisms, the products he or she is purchasing and as the hand-held device has in-built financial payment means which account details are acceptable to the vendor, means that the whole experience of the exchange can be done under the virtual guidance of authority of the hand-held device without any interruption or input from sales assistants or check out operators or other attendants.

Advantageously, the vendor is continuously subtly informing the customer throughout his or her journey as the shopping list products are purchased or program guide programs are viewed or itinerary activities are actioned. For example, as the customer is being directed to a specified product along a particular aisle, as they pass certain locations information about other products, special discounts and the like can be presented on screen for the customer's information.

Still further, when the customer selects a particular product further information can be provided to the customer by the information held in the database as to related or complementary products to such a purchase or details about the product such as its additives, energy content, containment of allergens, containment of genetically modified organisms, country of manufacture, content rating (R, M, PG, G etc) and other such information of value to consumers.

Advantageously, the device may be configured with information filters that are able to interpret such details and cross match them against personal preference details previously provided by the customer so as to alert them only when a product being selected has an attribute that is of interest or concern to the consumer.

Hence while no shop assistant or checkout person or attendant has come in contact with the customer, the actual experience obtained by the customer is very much akin to having a personal assistant guide them through the entire process in order to achieve their aim of completing a purchase of those items on the shopping list or program guide or itinerary efficiently, informatively and expeditiously.

Hence not only was the customer being able to be guided conveniently and expeditiously throughout the precinct such as a shopping plaza or within a particular supermarket or sporting venue or entertainment venue and the like, they were also kept continuously informed and updated with information within the locality that may affect or should be considered by the customer during the experience.

The arrangement could also work in scenarios such as sporting matches festivals, zoos, museums, food outlets, fun-parks and the like.

For example, a customer is in the vicinity of a music festival. Outside the perimeter of the festival's precinct, a public access Wi-Fi or Bluetooth network is provided to allow people in the vicinity to peruse and otherwise browse limited materials perhaps by way of the festival's public website provided to entice them to attend.

Those choosing to attend would enter by way of various gates into the precinct grounds and at this time may be given the opportunity to swipe their credit card, or pay a cash deposit in order to loan a hand-held device referred to above should they not personally own one. Now within the physical precinct the customer may perform the proximity touch gesture with the device by way of a proximity station conveniently located at the entry point and in so doing said device would automatically be connected through to the festival's private database via a secure wireless network. The customer now having access to the festival's precinct is provided with unrestricted access to all manner of services, information and privileges not available to those outside.

As one could expect, at a music festival the customer may under one scenario have a personal favourite act they must see. For example purposes only, let us say that the musician was referred to as musician A.

Advantageously through this arrangement, the customer would then be able to search for musician A and the hand-held device would list the session times and if appropriate also direct the customer to where this particular musician would be playing as part of the music festival.

Still further, as the customer appears to like the music of musician A, he or she would then be able to select the available music that musician A has made available for sale through the hand-held device.

It would be expected that under the music festival arrangement used in conjunction with the hand-held device to facilitate the exchange between artists, music festival organisers and attendees, that all the artists.and musicians would be set up with an area in the festival's database containing the music and videos they are offing for sale, these being accessible via the festival's wireless network which allows attandees access to all these particular artists and musician details and items for sale.

Hence the database would include all information about respective artists including their songs, lyrics, discography and even recordings of live performances made at the music festival.

In the case where the customer wishes to purchase items from the database, these would be added to an electronic shopping basket as is currently the practice. When the customer was ready to pay they would request to checkout the contents of the basket. As part of the checkout procedure the customer would supply various details including how they want to take delivery of the purchased items, their contact information (email address or postal address) and then pay in the usual way by credit card, debit card or some other suitable arrangement. To facilitate ease of use, the customer's details, including payment and security details and other preferences may be kept securely in a contactless smartcard, which could be requested on-line, perhaps for a fee, along with the festival tickets. The customer may then touch this card against the hand-held device which may ask for a PIN code to be entered and if validated the relevant details would be sent from the card to the handheld device in order to personalize it, Thus if the customer had indicated their preference for electronic delivery of goods, then an account with password would have been created for them in the database and the purchased items would be allocated to that account. An email would be sent to the customer informing them of the account details so that they may download the items from a convenient location at their leisure.

It is dearly definable that the hand-held device, as discussed in the scenarios above, almost becomes a virtual guide or assistant and mobile purchasing system at the music festival to the attendee.

Once the customer, for example, becomes hungry he or she could simply key in the kinds of food they are looking for and then can be appropriately directed to that particular location in order for the product to be purchased and then consumed.

The same arrangement can exist when the customer needs to find a toilet or any other facility which has been encompassed within the confines of the music festival precinct.

Once the customer decides to leave the music festival, should they inadvertently exit the precinct without returning the hand-held device the said device, which preferentially includes speakers and/or vibration means, will alert the customer in order to remind them to return it and have their deposit credited back.

In a further example, the customer wishes to attend a theme or fun-park. Advantageously by use of the present arrangement the customer can benefit greatly by reduced queuing times and the availability of improved services.

Upon entry to a theme or fun-park, the customer may purchase tickets in the normal way. One option upon ticket purchase may be to pay an additional fee and receive a hand-held device. This hand-held device would allow for fast track booking of rides and a host of additional services and benefits including VIP service.

The customer may associate the hand-held device with various precincts located in the park using the previously introduced proximity touch gesture to proximity stations conveniently located throughout the grounds and thereby connect to the wireless networks and database provided and therefore have access to the products, services, information, applications and other resources available.

One of the services provided to the customer may be a list of rides and shows available at the park including descriptive and safety information and the indicative queuing time for each. The customer may select a ride and make a booking in several ways.

Firstly if the customer is familiar with the ride, they may choose to book the ride immediately using the hand-held device. This could be done from any location in the park or it could be done by going to the ride and proximity touching a station located at the ride entrance that may have Proximity-RF capability. Once the choice to book the ride is made, the system may offer the customer the ability to book for multiple persons and even to view the seats available, make a selection then confirm the reservation. Now with a reservation in the system, the customer will be notified of the ride start time, and receive progressive reminders until the ride starts. This beneficial arrangement allows the customer to freely explore other areas of the park while they are in a 'virtual queue' waiting for their reservations to become current.

The park operators may choose to offer these beneficial arrangements as a premium experience where the customer pays more so in addition to the previously stated benefits they may also provide express lanes or VIP lanes for customers with reservations so they always go to the head of the queue.

When entering a ride or show the customer may be required to proximity touch the hand-held device on the entry station and thus validate that the customer has actually made it to the ride on time and therefore stops reminders from being sent and confirms that the seat is taken. If the customer has missed their ride time, the system may reschedule them for the next available time. Once again the customer could pick a new seat position, or terminate their reservation altogether.

In the case of where a person is not familiar with a ride and want more information, they may get information on the ride such as age limits, warnings, fear factor, user revlews, etc. Also video clips of the ride in progress could be deployed to the screen so a customer could get a glimpse of the ride before booking.

After finishing a ride or, show, the park could offer incentives to customers to provide a quick feedback on the ride or service. This would allow for a continual improvement program for the park to provide better long term service to customers.

Other services could be deployed through a device of this type such as the location of restrooms, food outlets, exits, show events, rides, etc and scheduling information such as when events start, food specials for the hour, etc. Cross selling and advertising can also be provided on the device that would allow additional goods and services to be promoted and sold that interest the customer.

A further service that would be useful to a family would be a VOIP capability to allow members of the family to communicate with each other from one handheld device to another and to have an emergency call channel or emergency call button allowing quick response from park personnel, a useful feature for medical emergencies or lost children etc. An additional feature of this communication channel may be to allow staff members or the public to report to the park maintenance any spills, faults or other dangers that may be present.

A further feature may be the ability for the hand-held device to guide the customer around the park. Such guidance may take the visitor to points of interest or to special offers available at particular times or guide them to rides and attractions that are currently lightly used. As introduced earlier, the preferred embodiment includes a composite means for determining position based on several independent positioning technologies fused together in to one to provide more reliable service. For those venues that choose not to include this automated means, a simpler approach is possible by the customer touching the hand-held device to any proximity station and the location of that station being highlighted on a map of the park indicating 'you are here'.

Furthermore a customer loyalty program may also be provided where tne customer may earn points to be redeemed on other services within the park or participating services outside the park. Small businesses could do cross selling within the park and have credits redeemed later, such as 20% off a restaurant meal if enough points are gained.

In a further example a customer wishes to dine in a food outlet such as a fast food type or café type. Presently there exist three preferred ways for taking food orders at this type of outlet:
Queuing at a service counter;

Waiting for table service, and
Phone orders.

Although not initially obvious, all three methods are a form of queuing. The first is obvious. With the second approach the diner has the advantage of being able to enjoy the comfort of sitting at a table rather than standing, however they are still in effect in a time queue, as they need to wait for a finite number of servers to attend the other tables before reaching theirs. Phone ordering is a form of queuing where the customer waits in a hold queue or even gets engaged tone if the vendor is too busy.

A new method that some fast food outlets are now using is to place a self ordering kiosk near the entrance Customers can place their order at these kiosks. However, in this situation the queue is simply shifted from the order counter to the kiosk. Some cost savings are achieved if less people are needed at the order counter, however, the queue length is not effectively reduced unless there are more kiosks than there were counter staff.

Advantageously through the present arrangement the queuing effect is greatly reduced if not eliminated by removing the sequential nature of the current order taking process Effectively now the customer may most beneficially place orders from their table or in fact remotely to the restaurant with a suitably equipped hand-held device.

The ability to place orders and access other services from the table can be implemented using a hand-held device that communicates via a wireless network to a database thereby gaining access to the applications and/or other resources provided for the restaurant. In effect the restaurant is treated as a precinct in the same way as described in earlier examples where the hand-held device is introduced to the precinct via one or more proximity stations conveniently located within the restaurant

Once connected the hand-held device allows the vendor to display the services, food and beverages that are available within that establishment and to allow the customer to browse the menu, order and optionally pay right from their table. Thus the customer experience is enhanced because they no longer need to physically queue for service or gain the attention of waiting staff when ready to order. Although this capability is highly desirable some customers may still choose to select full traditional service which could be an option they may select from the terminal/ hand-held device. Even if the customer chooses full table service, the customer can still benefit from the present invention because the terminal/device may provide 'attendant call' functions whereby they can at the touch of a button request services such as ready to order, ready to pay, or general request. This level of service exceeds the current finger in the air or hand waving that currently occurs to get such attention.

Once the customer places their order the database and applications may continuously analyse the number and types of orders in the order queue with the aim of providing an estimate as to when the order is likely to be fulfilled. In addition the customer can enquire to see how their order is progressing in the current queue of orders. Once the order has been prepared, the customer may be notified to collect their meal at a designated area otherwise an attendant may be notified to deliver it to them.

Apart from providing ordering and attendant requests from the table, the present arrangement may also provide payment from the table. In a simple form the customer may be provided with a 'request bill' function that requests the establishment to finalise and bring the printed bill to the table for conventional payment. Alternatively the hand-held device could allow the customer to pay at the time of order using existing means such as credit or debit cards or other suitable arrangements.

In an alternate arrangement a specialised proximity station may be placed outside the establishment or in the main window where passers by may touch their hand-held device to it and then gain access to the menu on the screen of the device and perhaps other relevant information the establishment chooses the public to know.

In an alternative form of the invention there is provided a hand-held electronic device to activate and/or communicate or read from a series of apparatuses, arrangements, databases or situations to assist and/or safeguard a user with his or her daily routine, wherein the communication requires no prompting from said user for such assistance, said hand-held electronic device including,
buildable internal logic to associate an appropriate action of a user with a required response from the device with or to an external device linked wirelessly to said to device so as to assist and/or safeguard the user with his or her daily routine,
said buildable logic created by a first means wherein first means includes a means to receive static instruction from the user, whereby the user associates an action with a context from a set of common predetermined context and actions for the device to remember and then respond upon as provided through the static instruction or programming presented by the user such that when the user is subsequently placed in a defined context provided for by the static instruction said electronic device will communicate with each of the linked devices according to a predetermined instructed scenario,
said buildable logic created by a second means, wherein second means includes dynamic instructions set to provide logic where the device prompts the user for information and action when a context is identified wherein unlike the static instruction set, the context had not been predetermined and accordingly when said device finds itself within the context for the first time said second means seeks comment from the user so as to identify certain aspects of the context so identification is such that any subsequent scenario where the user is placed in the same context will see the learnt action carried out without necessary prompting or involvement from the user subsequently,
said buildable logic created by a third means, wherein third means includes an observation means whereby the device observes the activity of the user and associates it with contextual information such as time, date, location, motion, appointments, daily routines so as to determine when deviations from a routine are observed, the third means is able to subsequently prompt the user to the recognition of this deviation so that predetermined action can be instigated by the device or alternatively further learning by the hand-held device to associate an appropriate action for the particular context.

### BRIEF DESCRIPTION OF THE FIGURES

Figure 1 shows schematically a series of snapshots as to how this arrangement to facilitate an exchange between a customer and a vendor takes place in a supermarket store.
Figure 2 again is a further schematic representation of what has been presented in Figure 1 showing how the shopping experience is unfolding for the customer who is utillsing the arrangement as described in this invention upon the shop floor of a supermarket.

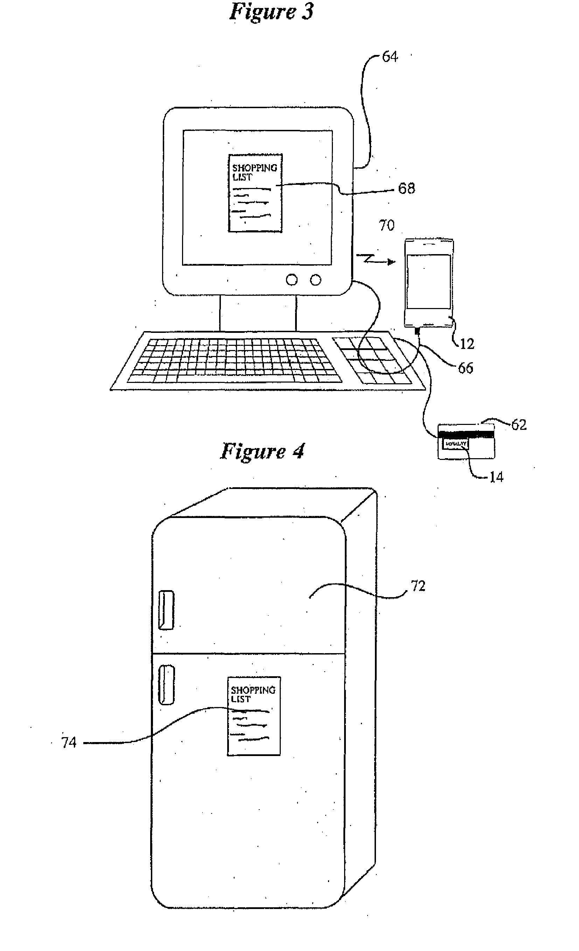

Figure 3 shows the arrangements by which a home user can plan their shopping or event attendance on their own computer and transfer the information to the hand-held device or to a contactiess smartcard.
Figure 4 shows an alternate means where by a home user can plan their shopping list using a tablet computer that may read barcodes and be conveniently mounted on a stand or able to be mounted in a convenient location.
Figure 5 shows an example of four precincts and how they may relate to one another.
Figures 6a, 6b, 6c and 6d show schematically an example as to how in one preferred embodiment of this invention the hand-held electronic device is able to assist a user, who in this scenario is being assisted in awakening and attending to the first appointment of the day and then subsequently making their way to the office.
Figure 7 shows a further application wherein the user of the device in a preferred embodiment of the invention is in the context of driving a vehicle.
Figures 8a, 8b and 8c context reflects the relationship of the user of the device with arriving at an office scenario and the attending of a subsequent appointment out of the office thereafter and also receiving incoming telephone calls on the trip back to the office.
Figures 9a and 9b show the context wherein the user is returning to the home environment and the interaction of the electronic device with a variety of home appliances and the like to assist and prepare the user for a comfortable return to the home after a day at the office.

### DETAILED DESCRIPTION OF THE DRAWINGS

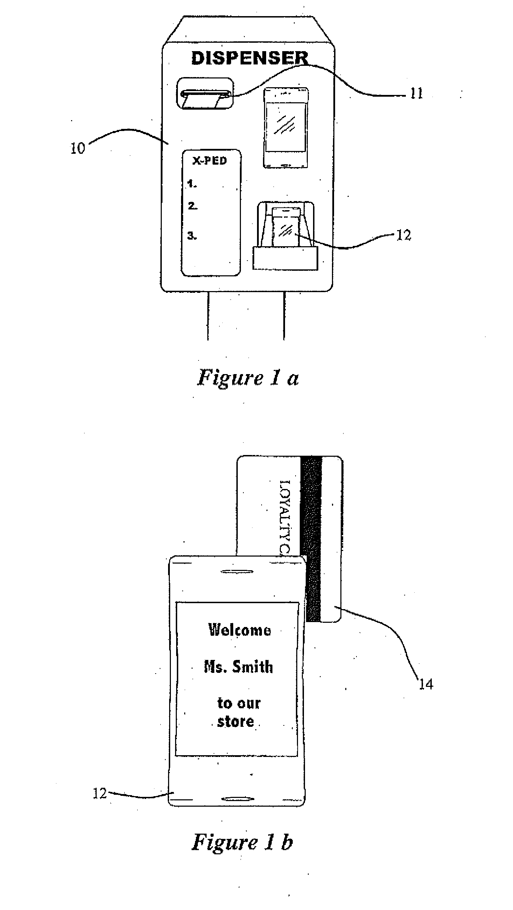

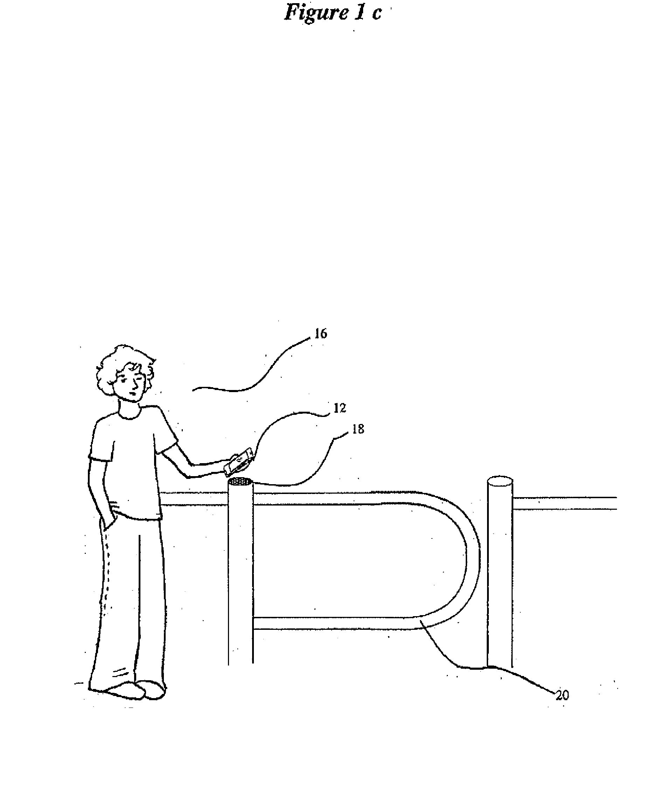

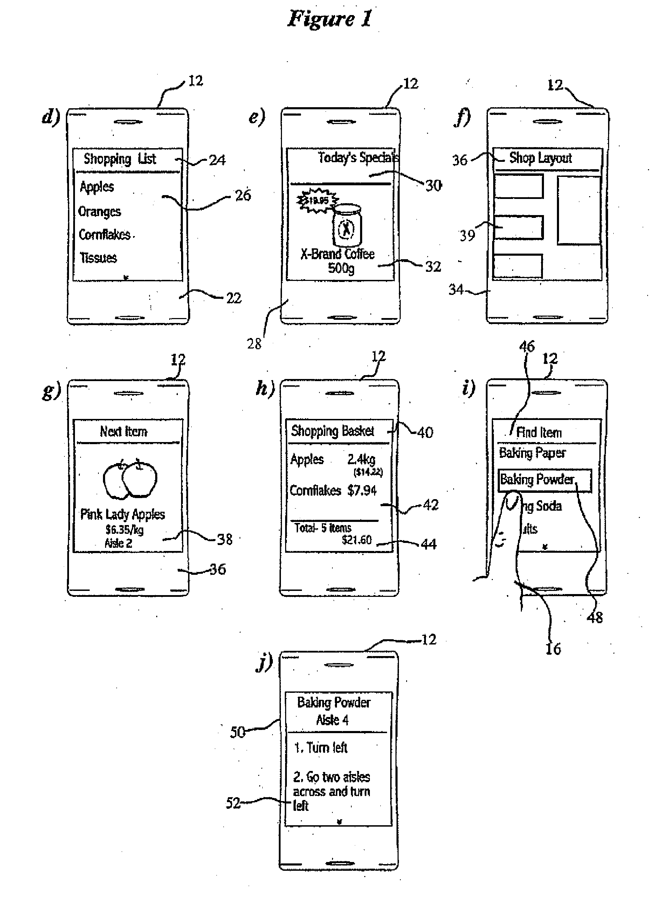

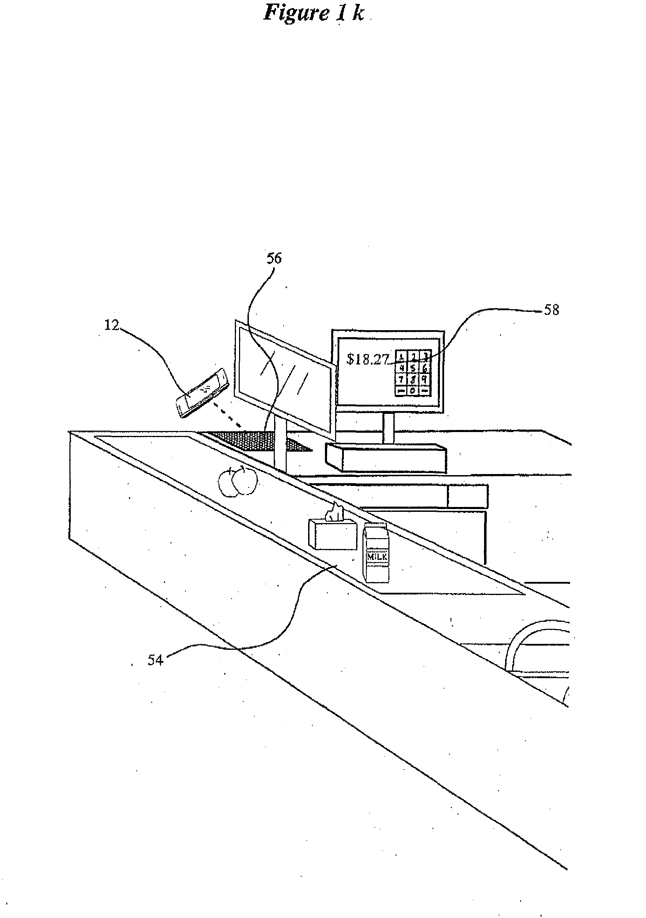

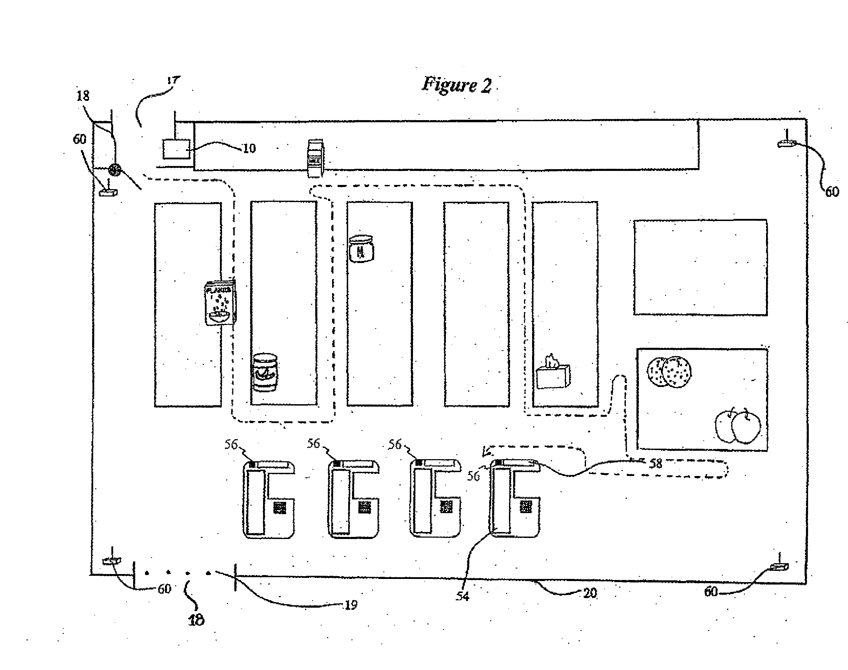

In the preferred example provided in Figures 1 and 2, a customer (16) would enter the supermarket (20) via entrance (17) which is equipped with a pad-type proximity station (18) attached at a convenient position on top of the one way entry gate. When customer (16) had finished shopping they would leave supermarket (20) via exit (19) which is equipped with several gate-type proximity stations (18). Supermarket (20) may optionally be equipped with local wireless networking equipment (60) or may share a network provided by a larger encompassing precinct (not shown).

Before the customer (16) enters the supermarket (20) to commence buying a series of products on a shopping list which they have transferred across to their hand-held device (12), they will need to first touch the hand-held device against a proximity station (18) located at entrance (17).

In some circumstances, if the customer (16) does not have their own hand-held device (12), they could purchase, hire or loan the device at a vending machine or the like shown generally as (10).

Preferably it would be envisaged that the customer (16), if they did not have their own personal hand-held device which includes all the functionality described precedingly, they would insert their credit card (11) into or proximity touch their loyalty card (14) to the vending machine (10) in order for the appropriately configured hand-held device of this arrangement to be dispensed.

The customer (16) is able to maintain any loyalty or discount shopping arrangements they may have to which the supermarket may be a part thereof and such loyalty cards (14) can be recognised by the hand-held device (12).

In this way customers without their own personal hand-held device can still participate in the enhanced shopping experience. This can be achieved by such customers buying or being provided with a low cost card reader/writer device (62) for connection to their home computer (64). In one embodiment, using software provided by the vendor (68) the customer is able to compile a shopping list and have the list saved to their loyalty card via the reader/writer device along with their personal preference details. In another embodiment the customer may be able to compile a free form list or 'wish list' of items that are not referenced to a stock keeping unit (SKU) of a particular vendor. When such a user has acquired a personal hand-held device at a participating store, they can touch the loyalty card (14) against the device (12) to transfer the shopping list and personal preference details to the device as shown in Figure 1b.

For customers that own their own personal hand-held device the software provided by the vendor (68) is able to save the shopping list to the device via a wired connection (66) or wireless network connection or via a cellular network using SMS, MMS or email (70).

This arrangement will also allow the transfer of shopping lists program selections and itineraries and the like wherein a customer will be able to purchase an inexpensive terminal (62) that connects, for example, to a computer or the like (64) through a cable (66) or wireless connection (70). The customer would then be able to download a planning software program (68) from a vendor's website from which the information will be derived. This will allow the customer to record or transfer across their personal preference details, shopping list and program selections and itineraries through the hand-held device or to a loyalty card for those customers that do not own a hand-held device.

Those skilled in the art will realize that in another embodiment computer (64) could be replaced or augmented by a tablet computer (74) which could be located in the kitchen, perhaps on a fridge (72) or a wall or a countertop via a stand. Tablet computer (74) may come equipped with a barcode reading means and card reader/writer means and wireless communications means already built in making it very convenient for user (16) to build their shopping lists by simply scanning the bar codes of items that are used up and need to be replenished before the empty packaging is disposed of, then transferring these to a hand-held device or contactiess smartcard. In this arrangement tablet computer (74) may also hold several shopping list types for example basic weekly (food), monthly (cleaning and personal hygiene products), seasonally (in-season produce, garden products), special occasions (birthdays, anniversaries). These lists could be used as templates from which an action list is based and to which the aforementioned items scanned by barcode could augment.

As shown at (22), the screen of the hand-held device (12) presents a shopping list (24) of a variety of different types of grocery items (26), in this preferred embodiment, which includes apples, oranges, cornflakes, tissues and pet food. The estimated total cost of the shopping list at that time and store can be calculated by the database and displayed to the customer so that they are sure they have sufficient funds available to complete the intended purchases. For those items on the shopping list that are provided without an SKU, the database must find the closest matchng stocked item if possible and use those details in the calculation of the estimated total cost.

As the hand-held device has been activated by coming in to proximity with proximity station (18) located at entrance (17), the hand-held device now becomes associated with the supermarket's precinct and is thus able to communicate via a wireless network with the database and applications and/or other resources provided for the supermarket precinct (20)

The hand-held device (12) is in continuous communication with the database such that, for example, displays such as shown at (28) of various supermarket specials (30) can be presented (32) to the customer (16) of the hand-held device.

As shown at (34), the shop layout (36) can be displayed onto the screen of the hand-held device to map out the appropriate way and order in which the customer can travel about the store in order to select all the required items included as part of the shopping list. For example frozen and soft items are picked last so as to prevent thawing and other damage:

As previously introduced, navigation means can assist the customer as they make their way throughout the supermarket and display screens such as those presented at (38) can direct the customer (16) to a required item indicating the cost involved, details of interest such as additives, energy content, containment of allergens, genetically modified organisms etc and its precise location (39).

A barcode or RFID reading means is used to read the identifer of a picked item, which is then transferred to the hand-held device where the associated product information is read from the database and made available for display and the customer may quantify the number of items of that product picked. As shown in display (40), a shopping basket can be included also so that the customer (16) can keep track of products they have selected and the running cost total incurred (44).

The customer may depart from the shopping list (if any) at any time and pick adhoc items as required These are added to the shopping basket in the normal way by way of the barcode or RFID reading means previously introduced.

In cases such as the display presented at (46), the customer is able to find items which in this case is baking powder (48) and the display (50) will then clearly indicate to the customer m a familiar turn by turn method (52) where and how the customer (16) need to travel in order to find that particular product on the shop floor of the supermarket. Because the hand-held device is associated with the precinct for the supermarket the scope of the search is limited to only those items in the supermarket precinct (20) not any others that may be in other precincts.

Once all the shopping items have been collected and the shopping basket information has been input into the hand-held device (12), the customer is then able to enter a checkout aisle (54) and once again touch the hand-held device against a proximity pad (56) provided to enable communications between the hand-held device and the in-store point of sale (POS) terminal. The hand-held device transfers the pick-list information to the POS terminal which then acknowledges all the purchases made by the customer, calculates the final total for the shopper to pay and presents this (58) upon the POS terminal display thus allowing payment to be made in the normal way.

In the context of a supermarket or other store, theft prevention (not shown) can be achieved by placing scales in the floor of the checkout aisle and at the countertop. The shopping trolley is wheeled on to the scales or a hand basket is placed on the countertop scales and the POS terminal reads the weight. Once the hand-held device transfers the shopping basket to the POS system, the latter calculates the expected weight of the trolley and its contents. If the weights are not in good agreement, the customer or store assistant can take some action such as to locate any un-scanned items or to manually scan all items again. Furthermore, weighing stations may be placed at convenient locations around the store to allow customers to check whether the actual weighed weight of their basket of goods is in close agreement with a running total weight calculated by the hand-held device (12) or the database as items are acquired.

Atter paying, customer (16) exits supermarket precinct (20) via exit (19) and in so doing passes within proximity of several gate-type proximity stations (18) strategically located there. Upon detection of these, hand-held device (12) disassociates itself from the supermarket precinct (20) and associates itself again with any encompassing precinct. In this manner the search scope can be automatically and beneficially expanded and contracted as the customer moves about within a structure of precincts.

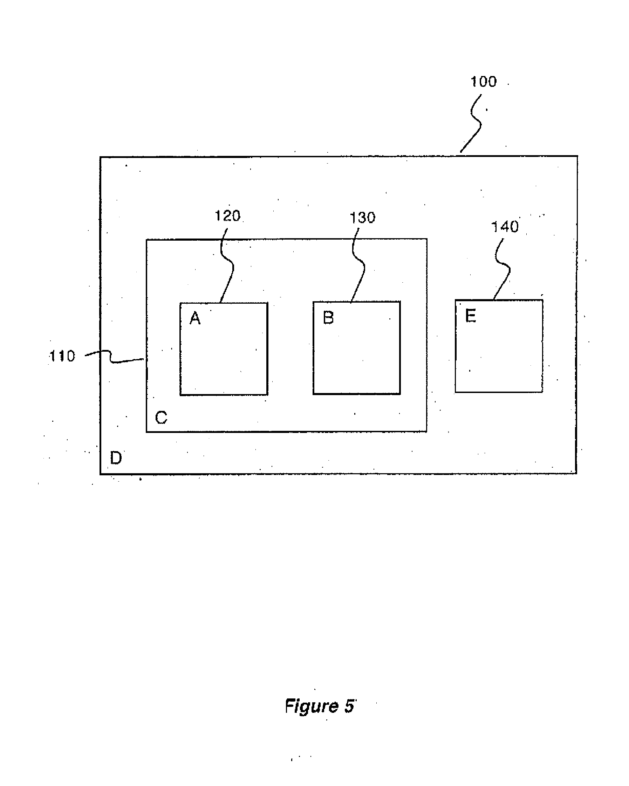

For example in Figure 5 precinct A (120) may be a supermarket and precinct B (130) may be a store, which are enclosed by precinct C (110) which may be a shopping mall, which is further enclosed by precinct D (100) which is the main retail area of a city and so on. Now each vendor can upload the information about their location, products, services, applications and/or other resources as well as promotional materials including any specials and the like that currently exist into an area of the database provided for that precinct which once a customer comes in range, for example sets foot upon the main shopping street in a city or enters a shopping centre or enters an individual store or enters the grounds of a festival, sporting event or other attraction, can conveniently use the hand-held device and through interaction with a proximity station after which access is then provided to the correct wireless network for communication with the area of the database that holds information on that particular precinct. Importantly the precinct concept and the principle of grouping and containment provides very powerful scope reduction capabilities for searching the database of vendors. For example if a customer made an association with precinct D (100) and instigated a search for a common item, the item may be found in precincts A, B and E. However if the customer made an association with precinct C (110) then the search results would be limited to precincts A and B and similarly if the customer made an association with precinct A (120) the search results would be limited to only that precinct. Additionally hand-held device (12) may maintain a list of recently visited precincts with current associations and thereby allow user (16) to manually select the precinct they wish to use as the current search scope context.

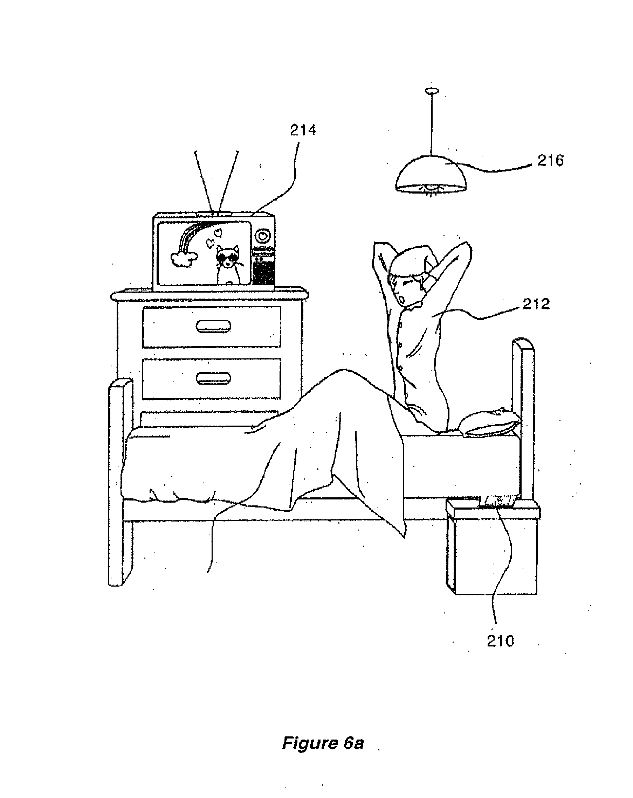

Referring to the drawings now in greater detail where therein provided in Figures 6a to 6d a lifestyle learning application that the electronic device 210 of this invention is providing for in what could best be described as a start of the day context for the user 212.

The hand-held electronic device recognizes that it is a Tuesday morning and it is time for the user 212 to get up and get themselves ready for work. The electronic device 210 by virtue of its knowledge management of its internal logic which has the ability to access databases and networks to inform itself of times, dates, locations and the like recognize that given that it is a weekday it should sound an alarm at 6.30a.m. in order for the user 212 to wake up and commence the start of the day.

As the person skilled in the art would appreciate that if it was a weekend or public holiday there would not be the requirement for the alarm to sound unless the user 212 had a particular appointment or commitment to attend to.

Hence the electronic device is simply not linking itself to the alarm system 214 but in fact communicating and completing a task between itself and the alarm, system 214.

As introduced above the electronic device provided for in this invention is far more than simply an apparatus, which is able to link together a wide variety of devices so that they can acknowledge that each particular device exists. The electronic device 210 of this invention not only can link together electronic devices but activates them by understanding the context to which the user 212 has found his or herself in a particular environment.

As introduced above the electronic device does this through its unique ability to associate an appropriate action to a context for the user and its ability to learn is achieved through static instruction, dynamic instruction and observation.

For example in Figure 6a rather than having the electronic device 210 simply instigate an alarm it is communicating with a stereo system 214 such that once 6.30a.m. arrives, the sound of the user's favourite song will be broadcast upon the stereo 214 and the lighting 216 in the user's room will slowly illuminate so that the user is not uncomfortably presented with bright lights upon awakening.

The electronic device 210 has been able to assist in this early morning awakening of the user 212 because it has learnt how to respond either by being specifically programmed to act on the predetermined context which requires it to act in certain ways, or alternatively learn the profile of the user and at the same time also observe various particular sltuations in the daily ritual of the user 212 in awakening to start the day, so as to apply this knowledge subsequently.

For example, if the user fails to get themselves out of bed at 6.30a.m. and alternatively remained motionless on the bed and thus failed to acknowledge the alarm for some reason the observation capabilities inherent within the electronic device 210 would show that this type of behaviour deviates from what one might expect from the daily routine of the user 212 and accordingly the electronic device would then release some kind of signal for the user 212 to acknowledge of which then if ignored could prompt certain predetermined actions for the electronic device 210 to carry out, which could include amongst other scenarios contacting a next of kin, neighbour, emergency service or signal some kind of alarm.

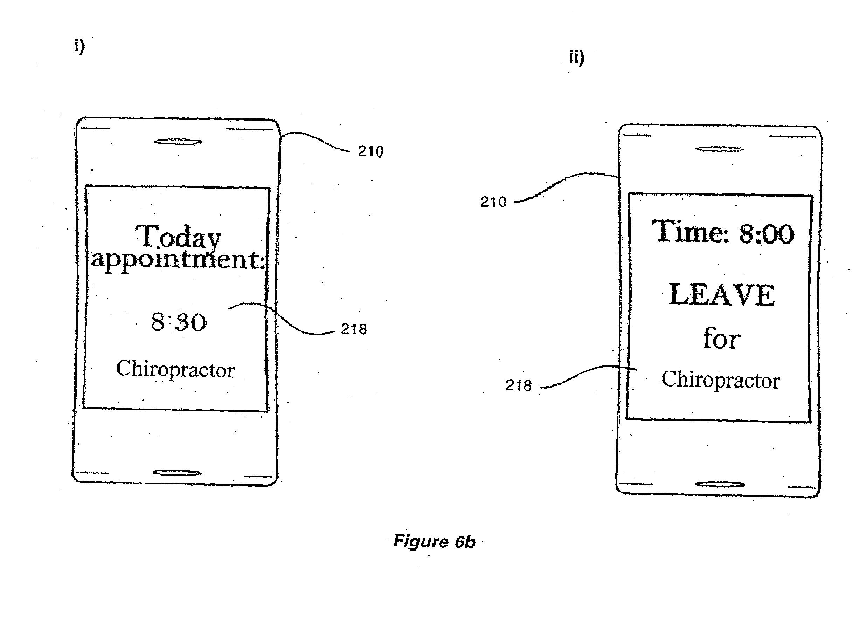

Figure 6b as most PDA's also do, simply shows to the user 212 today's appointments 218 which in this instance is at the chiropractor at 8.30a.m.

Nonetheless the electronic device 210 in this invention takes that information to a much higher level so that it can act upon it and assist the user 212 as he or she makes their way to the required appointment at 8.30a.m.

For example as the appointment is at 8.30a.m. the electronic device utitizing its internal logic that under the context that when the user must travel to one particular point will check with various databases and the like that provide traffic information as well as GPS information so that various times and the like can be mapped out for the travel time to be expected.

Once road conditions and route are known then travel time can be estimated, this information being learnt by accessing the relevant databases or information feeds and the like, the electronic device 210 can then advise the user 212 of the time to leave if the chiropractor appointment is to be made punctually.

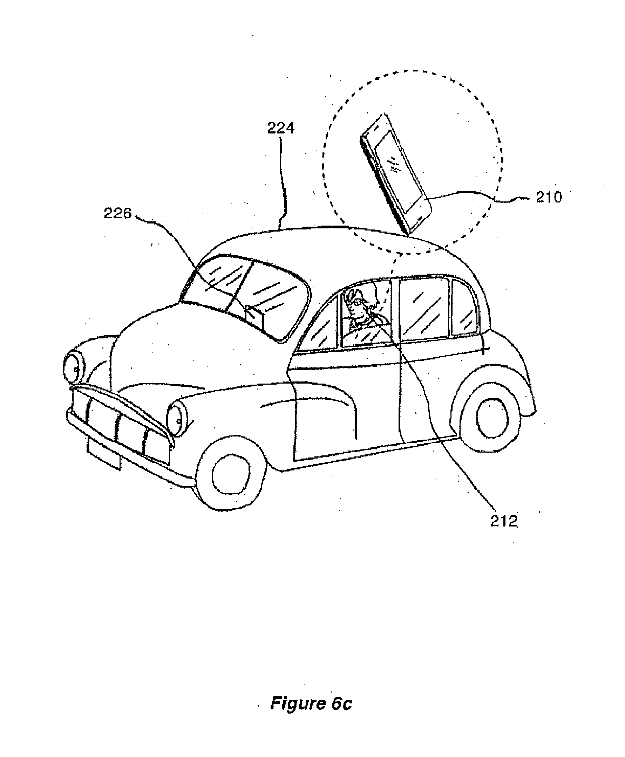

Figure 6c then expands upon this proactive relationship the electronic device 210 has with the user 212 in order to assist in the user's 212 daily activities to get to the first appointment on time.

Once the user 212 is inside the vehicle 224 the electronic device then commences communication with the GPS 226 mapping out and providing continual information on the best way in which the user should make their way to the chiropractor.

For example if the normal route was congested for there had been an accident or the like, given the electronic device had checked with various traffic route databases or information it can act in real time advising the user 212 to take alternative faster routes and provide any further information with voice-based turning instructions if need be.

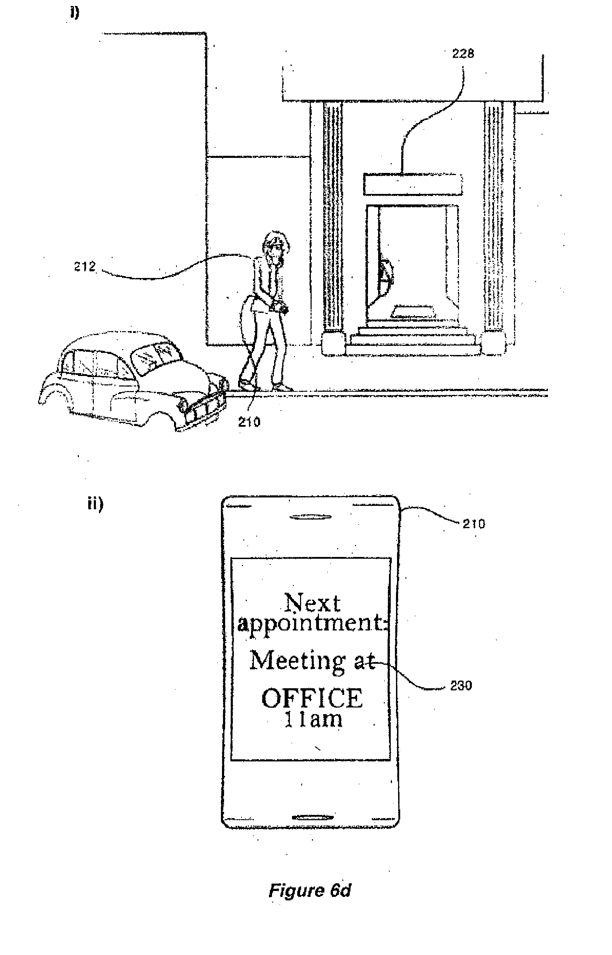

Figure 6d simply shows schematically that when user 212 leaves the chiropractor 228 the electronic device 210 then lets the user 212 know of the next appointment or at least the time the user is required to be back in the office 230.

As the electronic device 210 has become familiar with the profile habits of the user it recognizes that the user in this context will be able to drive from the chiropractor to the office without having to be unnecessarily, perhaps nagged or prompted, to follow certain roads and the like. The electronic device 210 has checked with various traffic data information and the user's general route back to the office seems the most appropriate way in which to return to the office and therefore it need not inadvertently provide information to which the user is already aware of.

Hence the electronic device 210 could be best described as the optimum assistant or guide. It knows by virtue of its understanding of the habits of the user what, when and how much information if required. Advantageously the electronic device 210 learns how to create a positive relationship rather than a nagging or in a sense artificial relationship, where the device will simply spew out information as it is programmed to do so as it has no real life learning or understanding of the context of a particular scenario in which the device finds itself in and therefore simply just releases information from predetermined developed programming rather than acqulring knowledge through a learning experience which then gives it knowledge management to understand what it is the user requires in the context of a particular situation the user finds his or herself in.

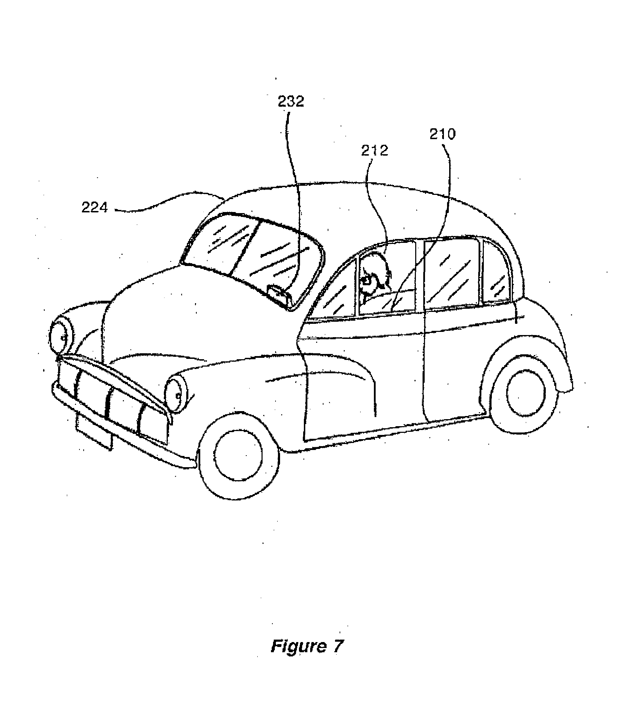

Figure 7 simply shows where the user 212 is inside a vehicle 224 and the electronic device acknowledges this and therefore makes a link to the stereo 232 so that it can begin to stream the current favourite album or playlist appropriate to the situation of the user 212 on the car audio system.

Agaln the point to be made is not only does the electronic device 210 link itself with the stereo system 232 of the automobile 224 but it communicates with it such that an action is taking place in order to assist the user 212. This assistance to the user is being established without any proactive prompting from the user 212. The electronic device 210 has learnt that the user 212 is driving, has learnt that the user's favourite album includes a particular list of sings and therefore through its logic associated with static instruction, dynamic instruction and observation is then able to combine these together to get this positive result for the user.

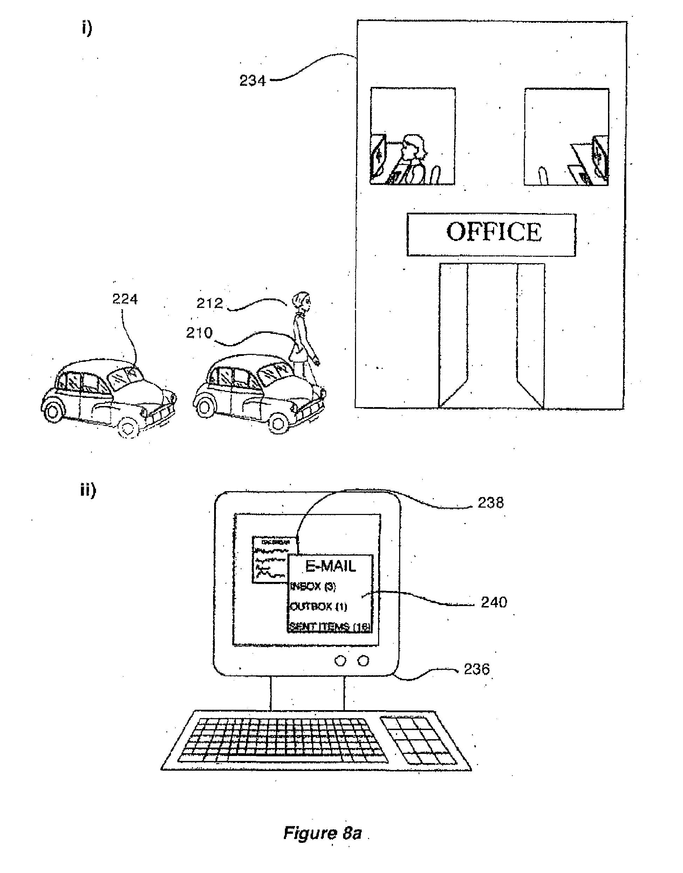

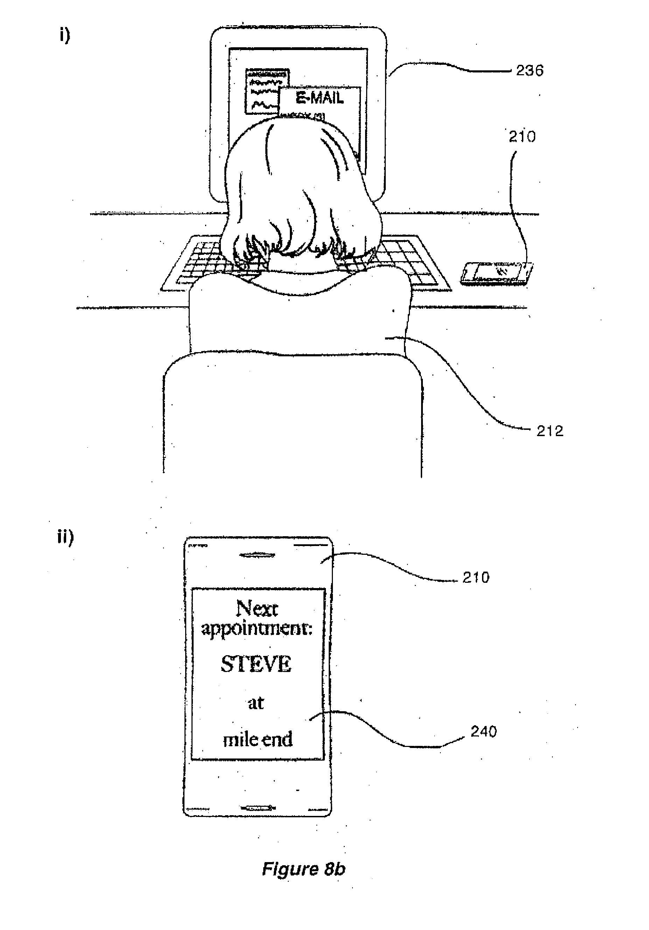

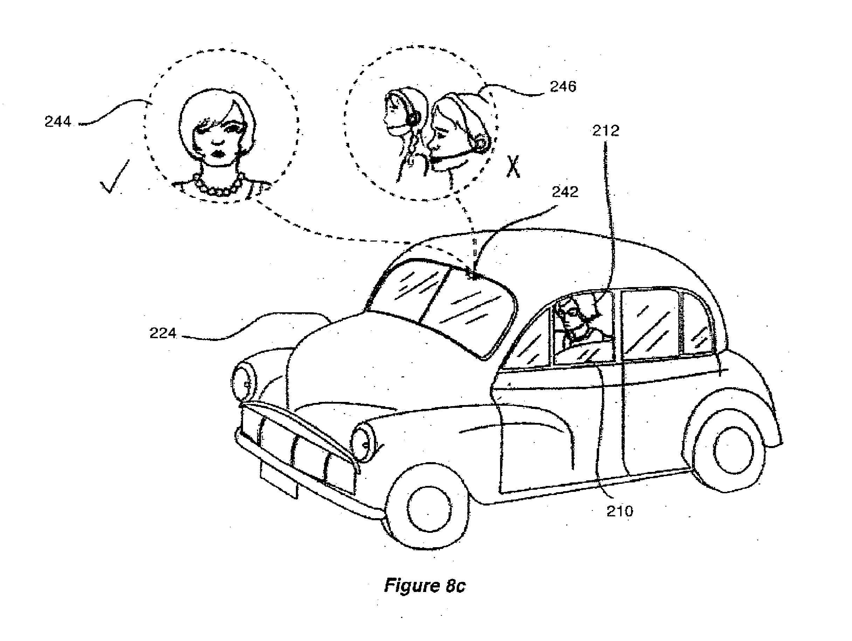

Figures 8a, 8b and 8c simply take the scenario of the working day further in that once the user 212 has parked their car 224 at the office 234, the electronic device 210 is aware of the context of the user in this type of scenario and therefore as the user 212 walks their way into the office has already prompted the user's computer 236 to awake and log itself in so that once the user arrives at his or her desk the computer will already have presented upon it today's calendar 238 and email 240 as well as opened up any other applications that are part of the user's daily routine of which would need accessing and use by the user 212.

Nonetheless the electronic device continues to monitor the situation and realizes that a further appointment for a business meeting needs to be attended to by the user 212 so accordingly it commences the background work as was the case in example for Figure 6a to 6d of the timing, directions to be travelled and prompting in order to see that the user 212 makes it conveniently, expeditiously and safely to the next intended appointment 240.

Figure 8c shows the user 212 returning from the subsequent appointment in the vehicle 224 wherein the hands free device 242 has been activated as the electronic device 210 knows that once the driver is in the car he or she prefers to use the hands free system 242.

As previously the electronic device is also in communication with the GPS arrangement and also can be in continual contact with the user's desktop either putting it into hibernation, seeking information from any databases or applications on the system and passing it on to the user when required.

As the electronic device 210 has an understanding of the routine and habits of the user it knows that an incoming call is coming from his or her partner 244 and therefore on directs that to the user 212 to be received and at the same time simultaneously turns down the car stereo system in the vehicle 224.

As to be expected other calls could also be incoming and again the electronic device recognizes these incoming calls and if it has not previously recognized such a call it will prompt the user 212 as to how he or she would like to respond to the call, which in this case could be a call one gets from a sales agency perhaps from india 246 to which the user 212 declines to answer.

This dynamic instruction then becomes part of the pool of knowledge to which the electronic device now has so it can handle such calls in future.

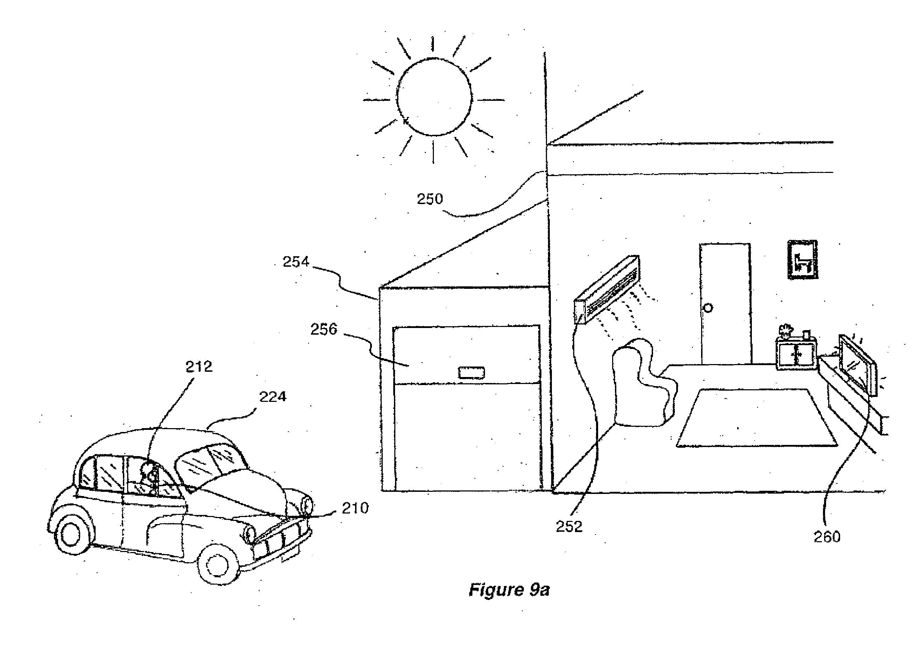

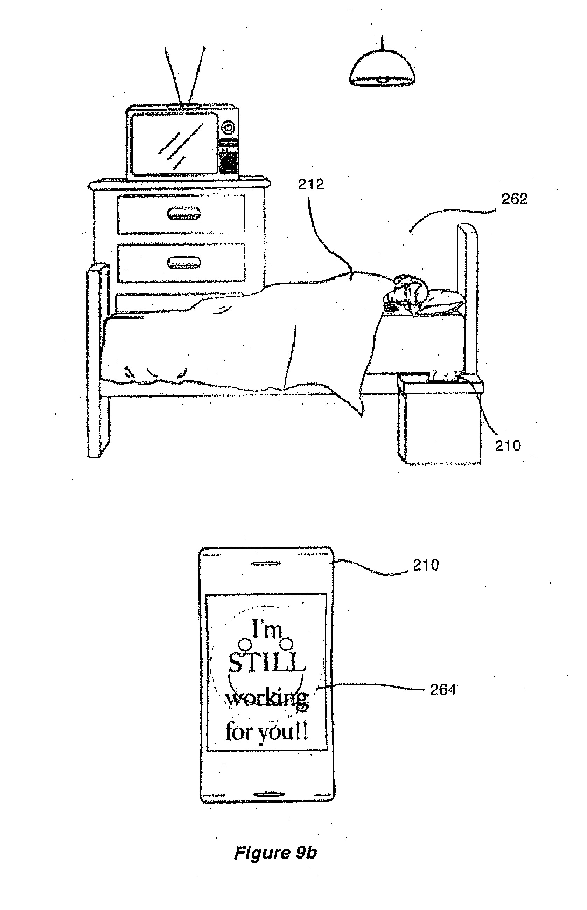

Figures 9a and 9b show the scenario as the user heads for home after a day at the office. In this scenario for example when the user 212 is ten minutes or so away from the home the electronic device makes contact with the automation system and asks that the house's 250 air-conditioning system 252 be turned on as it is particularly hot outside.

As the user 212 approaches the home 250, let's say at 100 metres from home, the garage 254 activates its roller door 256 so that as the user's vehicle 224 arrives at the garage 254 the door 256 of the garage has conveniently opened. At the same time the electronic device 210 disables the home security system and unlocks the back door such that the user is now able to walk into a cooled home wherein the electronic device 210 turns on the television 260 so as to change it to the preferred channel that the user for the most part habitually sits down to watch.

Nonetheless the electronic device 210 never sleeps 264 and though the user goes off to sleep 262 the electronic device 210 could for example be checking various television databases and the like so that it could determine whether or not a program of interest to the user may be on and accordingly as the electronic device 210 is familiar with the habits and has built up a profile about the user will pass this necessary information at the appropriate time to the user 212.

At the same time the electronic device, amongst literally doing scores if not thousands of other activities to assist, is churning through and looking for information on the internet, and knows that the user is looking to buy a particular product and has found such a product on a particular website of an internet auction site and accordingly will send an email of this internet page to the user's email address so he will see it in the morning at work.

Advantageously as can be seen it is the combination of the static instruction, dynamic instruction and observation which makes this electronic device able to act as an assistant to the user without continual prompting to do so.

The present invention will now be described by way of reference to the following clauses:
1. An arrangement for managing mobile device access to precinct regions so that a user can access usable information about certain products, services or other things from said precinct for real time consideration and decision making, said arrangement including:
   a server with a database of vendors, products, services, promotional materials, information, applications and other resources for each precinct;
   a hand-held device having means to allow a user to operate software applications including a web browser;
   said hand-held device having means to support short range wireless communication protocols;
   said hand-held device having navigation means displayable upon said screen to locate, promote and/or direct a customer to a certain location and/or vendor within precinct;
   communication means for said hand-held device to wirelessly access information from and transfer information to said database;
   wherein provision for the hand-held device to associate with a precinct is realised by the inherent short range wireless communication protocol of the hand-held device to be activated by proximity with a kiosk, port, pad, gate or zone (proximity station) within or near to the precinct region such that once access to the wireless network has been established as permitted through the proximity gesture of the hand-held device coming in range with said proximity station, the user of the hand-held device may then interact with the precinct and those associated vendors, products, services, information, applications and other resources from the database and to be then under the guidance of the navigational display appearing on the hand-held device to be then guided to the point of sale of such a vendor, product and/or service.
2. The arrangement of clause 1 wherein the short range wireless communication protocols include near field communications, inductive coupling, RF1D or other short-range communications technology that acts over the distance of several centimetres.
3. The arrangement of clause 1 wherein the communication means for said hand-held device to wirelessly access information from and transfer information to said database includes a local area network based on Wi-Fi and/or a personal area network based on ZigBee or Bluetooth or UWB.
4. The arrangement of clause 1 wherein a vendor may associate themselves with a single precinct or alternatively several vendors may be grouped by a common precinct or alternatively a precinct may be standalone precinct or may be encompassed by another larger precinct or alternatively encompass other smaller precincts.
5. The arrangement of clause 1 wherein the hand-held device and proximity station may request the other to provide credentials that enable the requestor to authenticate the identity of the other.
6. The arrangement of clause 1 wherein a vendor makes available hand-held devices either for purchase or available for hire or loan from a vending machine convenient to the vendor's precinct.
7. The arrangement of clause 1 wherein a customer may personalize and/or configure a hand-held device by the transfer of information from a contactless smart card.
8. The arrangement of clause 1 wherein an authority to access the wireless network and subsequently the database, applications and other resources being offered for the precinct there is a physical requirement for the customer to get the hand-held device in close proximity with said proximity station which will allow the hand-held device to associate with the vendor's precinct and thereby have access to said resources or disassociate from the vendor's precinct depending on the purpose of said proximity station.
9. The arrangement of clause 8 wherein each proximity station which handheld devices are activated by can be kept under close video surveillance and hence if for some inadvertent reason the device was lost or stolen, the whereabouts and holder of the device can be identified as the device is presented at a proximity station to which surveillance of such station is continuously under.
10. The arrangement of clause 1 wherein the hand-held device navigation means comprises:
   the positioning capability of the communications means;
   two or more tri-axial accelerometers;
   an electronic compass capable of 3D operation;
   floor plan or map data relating to the precinct;
   software algorithms to analyse and fuse together the communication network derived position, sensor derived displacements and precinct data to yield an optimum position solution.
11. The arrangement of clause 10 wherein the hand-held device navigation means further comprises a GNSS receiver.
12. The arrangement of clause 10 wherein as the customer interacts with proximity stations where the precise location of the station can be determined, the hand-held device may reset the current position solution of the navigation means to that of the station and thereby ameliorate any errors in position that may be accumulating.
13. The arrangement of clause 10 wherein magnetic anomaly data provided for the precinct is used to correct the measurements of said electronic compass at locations within the precinct for distortions in the local magnetic field and the required offset to true north.
14. The arrangement of any of clauses 10 to 13 wherein the hand-held device and/or the database collects usage information which may include time, date, device identifier, position, speed, orientation and gestures which may subsequently be used in the determination of user dwell times, density maps and other metrics for the associated precinct.
15. A hand-held electronic device to activate and/or communicate or read from a series of apparatuses, arrangements, databases or situations to assist and/or safeguard a user with his or her daily routine, wherein the communication requires no prompting from said user for such assistance, said hand-held electronic device including:
   buildable internal logic to associate an appropriate action of a user with a required response from the device with or to an external device linked wirelessly to said to device so as to assist and/or safeguard the user with his or her daily routine;
   said buildable logic created by a first means wherein first means includes a means to receive static instruction from the user, whereby the user associates an action with a context from a set of common predetermined context and actions for the device to remember and then respond upon as provided through the static instruction or programming presented by the user such that when the user is subsequently placed in a defined context provided for by the static instruction said electronic device will communicate with each or the linked devices according to a predetermined instructed scenario;
   said buildable logic created by a second means, wherein second means includes dynamic instructions set to provide logic where the device prompts the user for information and action when a context is identified wherein unlike the static instruction set, the context had not been predetermined and accordingly when said device finds itself within the context for the first time said second means seeks comment from the user so as to identify certain aspects of the context so identification is such that any subsequent scenario where the user is placed in the same context will see the learnt action carried out without necessary prompting or involvement from the user subsequently;
   said buildable logic created by a third means, wherein third means includes an observation means whereby the device observes the activity of the user and associates it with contextual information such as time, date, location, motion, appointments, daily routines so as to determine when deviations from a routine are observed, the third means is able to subsequently prompt the user to the recognition of this deviation so that predetermined action can be instigated by the device or alternatively further learning by the hand-held device to associate an appropriate action for the particular context.

## Claims

1. A system for providing data associated with one or more precinct regions, the or each precinct region comprising one or more of physical resources, service providers and goods vendors, each precinct region being associated with data relating to, one or more of the physical resources, service providers and goods vendors, and wherein one or more of the precinct regions comprise one or more other precinct regions, **characterised in that**:
the system further comprises a proximity station, operable to communicate with a mobile device of a user when the mobile device is brought into near field proximity with the proximity station associated with said precinct region or other precinct region, to uniquely associate the mobile device with the precinct region or other precinct region and make available data relating to the precinct region or other precinct region to the user of the mobile device.

2. A system according to claim 1, the system further including:
a precinct region communication system for communication between one or more of the precinct regions or other precinct regions and the mobile devices of users located in the one or more precinct regions or other precinct regions, wherein a prior proximity touch is used to establish communication between the user mobile device and a Local Area Network to facilitate communication of data relating to one or more of the precinct regions or other precinct regions.

3. A system according to claim 1 or 2 further comprising:
navigation system operable within a precinct region or other precinct region using map data associated with the precinct region and downloadable to a user mobile device , wherein the user mobile device includes a dead reckoning mechanism working with at least one inertial sensor within the user mobile computing device and a compass within the user mobile device, wherein the mobile device derives a location of the device within the precinct region using one or more of the map data, the inertial sensor, the compass and the communication system and determines the change in and the location of the user mobile device as the user moves within the precinct region or other precinct regions.

4. A system according to claim 3 further including:
data supplied by the precinct region communication system and made available to a uniquely associated user mobile computer device to make adjustments to the navigation system within the user mobile device.

5. A system according to claims 3 or 4, wherein the precinct communication system further comprises:
location data associated with the or each proximity station, wherein the location data of a proximity station is communicated to uniquely associated user device that is in the proximity of the proximity station and wherein the location data is used to reset the navigation system to the location of the proximity station.

6. A system according to any preceding claim wherein the data made available relating to the precinct region to the user mobile device relates to one or more of the resources, services and goods vendors in the precinct region.

7. A system according to any of the preceding claims wherein the result of a search conducted on the user mobile device includes results limited to data relating to one or more of the resources, services and goods vendors in the precinct region.

8. A system according to any preceding claim wherein the result of a search conducted on the user mobile device includes results limited by a user controlled information filter to include or exclude one or more of the resource, services and vendors in the precinct region.

9. A system according to any preceding claim wherein the data made available relating to the precinct region to the user mobile device relates a loyalty scheme between the user and one or more of the resources, services and goods vendors in the precinct region.

10. A system according to any preceding claim wherein the data made available relating to the precinct region to the user mobile device includes a response from the communication from a user mobile device of a user related list including one or more items, the response including at least one of: the most appropriate resource , service and goods vendor to supply one or more of the list items, the location of the at least one resource, service and goods vendor; the availability of one or more of the items; and the cost of one or more of the items.
